# FASCICULE DE BREVET EUROPEEN

(11) **EP 4 343 289 B1**
(45) Date de publication et mention de la délivrance du brevet: **05.11.2025**
(21) Numéro de dépôt: 23198987.2
(22) Date de dépôt: 22.09.2023
(51) Int. Cl.: G01H 1/12, H01H 71/04, H01H 11/00

(54) **PROCÉDÉ ET SYSTÈME DE DÉTERMINATION D'UN DOMAINE DE DÉCLENCHEMENT D'UN DISPOSITIF DE COMMUTATION DE CIRCUIT ÉLECTRIQUE**
VERFAHREN UND SYSTEM ZUR BESTIMMUNG EINER AUSLÖSEDOMÄNE EINER ELEKTRISCHEN SCHALTVORRICHTUNG
METHOD AND SYSTEM FOR DETERMINING A TRIGGERING DOMAIN OF AN ELECTRIC CIRCUIT SWITCHING DEVICE

(30) Priorité: 23.09.2022 FR 2209681
(43) Date de publication de la demande: 27.03.2024
(73) Titulaire: SCHNEIDER ELECTRIC INDUSTRIES SAS, 92500 Rueil-Malmaison (FR)
(72) Inventeur: FAVRE, Matthieu, 38500 VOIRON (FR); BOGUSLAWSKI, Bartosz, 38100 GRENOBLE (FR); VASILE, Costin, 38000 GRENOBLE (FR)
(74) Mandataire: Lavoix

(56) Documents cités:
- US-A1- 2012 197 556
- NICOLAOU CHRISTINA CHRISTINA NICOLAOU2@DE BOSCH COM ET AL: "On-site Online Condition Monitoring of Medium-Voltage Switchgear Units", LAK22: 12TH INTERNATIONAL LEARNING ANALYTICS AND KNOWLEDGE CONFERENCE, ACMPUB27, NEW YORK, NY, USA, 8 November 2021 (2021-11-08), pages 1 - 8, XP058858908, ISBN: 978-1-4503-9278-5, DOI: 10.1145/3494322.3494323
- SUN SHUGUANG ET AL: "Fault Diagnosis of Conventional Circuit Breaker Contact System Based on Time-Frequency Analysis and Improved AlexNet", IEEE TRANSACTIONS ON INSTRUMENTATION AND MEASUREMENT, IEEE, USA, vol. 70, 21 December 2020 (2020-12-21), pages 1 - 12, XP011832208, ISSN: 0018-9456, [retrieved on 20210120], DOI: 10.1109/TIM.2020.3045798
- MA SULIANG ET AL: "High-Voltage Circuit Breaker Fault Diagnosis Using a Hybrid Feature Transformation Approach Based on Random Forest and Stacked Autoencoder", IEEE TRANSACTIONS ON INDUSTRIAL ELECTRONICS, IEEE SERVICE CENTER, PISCATAWAY, NJ, USA, vol. 66, no. 12, 31 July 2019 (2019-07-31), pages 9777 - 9788, XP011737856, ISSN: 0278-0046, [retrieved on 20190801], DOI: 10.1109/TIE.2018.2879308

## Description

La présente invention concerne un procédé et un système de détermination d'un domaine de déclenchement d'un dispositif de commutation de circuit électrique.

L'invention se situe dans le domaine de la sécurité des installations électriques, et en particulier de la coupure d'alimentation électrique, couramment appelée disjonction, en cas de présence d'un défaut électrique dans une installation.

De manière connue, différents défauts peuvent se présenter dans une installation électrique, alimentée par un réseau de fourniture d'électricité, et mettre en péril la sécurité des équipements branchés dans l'installation, voire dans certains cas présenter un risque d'incendie ou un danger physique pour un opérateur.

Pour assurer la sécurité des installations électriques on utilise des dispositifs de commutation, couramment appelés disjoncteurs, configurés pour effectuer une coupure d'alimentation très rapide suite à une détection de courant supérieur à un seuil de courant nominal.

De manière classique, un dispositif de commutation comprend des contacts fixe et mobile, le contact mobile étant adapté à se déplacer entre une position ouverte dans laquelle il est séparé du contact fixe, et donc la circulation de courant électrique est coupée, et une position fermée dans laquelle le contact mobile est en appui contre le contact fixe et la circulation de courant électrique est possible. Le dispositif de commutation comprend également un mécanisme de déclenchement de coupure électrique qui entraîne le passage en position ouverte des contacts du dispositif de commutation, ainsi qu'une manette de réarmement.

La manette de réarmement est en général accessible à un opérateur sur une face du boîtier contenant le dispositif de commutation, et est déplaçable entre trois positions qui sont respectivement : une position « ouverte » (correspondant à la position d'ouverture des contacts), une position « déclenchée » (en anglais « tripped »), correspondant à une ouverture des contacts suite à un disjonction, et une position « fermée » (correspondant à la position de fermeture des contacts). Le passage de la manette de la position « ouverte » à la position « fermée » et vice-versa est réalisé manuellement par un opérateur, et le passage de la position « fermée » à la position « déclenchée » est entraîné automatiquement par le déclenchement d'une coupure électrique.

On connaît en particulier des disjoncteurs compacts à boîtier moulé, également appelés MCCB pour « Molded Case Circuit Breaker », comportant un module magnétothermique. La protection thermique déclenche une coupure d'alimentation en cas de surcharge du circuit électrique. La protection magnétique déclenche une coupure rapide du circuit électrique en cas d'un défaut sur une charge donnant lieu à un courant de court-circuit.

Pour de tels dispositifs de commutation, un des problèmes qui se pose est de connaître la cause du déclenchement de la coupure d'alimentation électrique.

En particulier, il est utile de savoir, lorsque la manette se trouve en position « déclenchée », si la cause du déclenchement est un défaut de surcharge ou un défaut de court-circuit, car les mesures correctives à prendre, et les risques de sécurité pour l'opérateur différent selon le cas de figure.

La plupart des dispositifs de commutation à base de module de protection magnétothermique ne fournissent pas d'information sur la cause du déclenchement.

Il existe des déclencheurs électroniques qui permettent d'identifier les causes de déclenchement néanmoins il existe un besoin de proposer un moyen moins onéreux d'identifier les causes de déclenchement en proposant une fonction additionnelle au déclencheur magnétothermique.

L'article « On-site Online Condition Monitoring of Medium-Voltage Switchgear Units », de C. Nicolaou et al , publié dans LAK22, 12th International Learning Analytics and Knowledge Conference, 8 novembre 2021, décrit un procédé de surveillance des conditions de commutation de dispositifs de commutation, utilisant des signaux temporels de vibrations.

La demande de brevet US2012/197556 décrit une méthode et un système pour détecter la mise en œuvre de commutateurs à partir de vibrations ou de signatures de vibration, en comparant la trace d'un signal de vibration à des signaux de référence.

Il existe un besoin de déterminer le domaine de déclenchement d'un dispositif de commutation, afin de pouvoir l'indiquer de manière à améliorer la sécurité de l'installation électrique et de l'opérateur qui intervient suite à une disjonction.

Les domaines de déclenchement comprennent respectivement :
- un déclenchement normal, sur commande d'un opérateur, par exemple par actionnement de la manette pour passer de position fermée en position ouverte ;
- un déclenchement de surcharge, dû à la présence d'une surconsommation électrique par au moins une des charges alimentées par l'installation électrique ;
- un déclenchement de défaut, dû à la présence d'un défaut électrique, par exemple un court-circuit, dans le dispositif de commutation.

Les domaines de déclenchement sont associés à des domaines de courant de coupure, définis en fonction du seuil de courant nominal.

L'invention a pour objectif de déterminer le domaine de déclenchement du dispositif de commutation et de l'indiquer à l'opérateur.

A cet effet, l'invention propose, selon un aspect, un procédé de détermination d'un domaine de déclenchement d'un dispositif de commutation de circuit électrique adapté à alimenter une installation électrique comprenant au moins une charge, le dispositif de commutation ayant une position d'ouverture dans laquelle la circulation d'un courant électrique dans ledit circuit électrique est coupée, et une position de fermeture dans laquelle un courant électrique circule dans ledit circuit électrique, le déclenchement du passage de la position de fermeture à la position d'ouverture étant effectué soit suite à une commande, soit suite à une détection d'un courant de coupure circulant dans ledit dispositif de commutation, le courant de coupure ayant un niveau dépassant un seuil de courant nominal.

Ce procédé est mis en œuvre par un module de calcul électronique configuré pour recevoir des données d'au moins un capteur de vibrations intégré dans ledit dispositif de commutation, et il comprend, dans une phase opérationnelle, des étapes de:
- obtention d'au moins un signal temporel de vibrations, sur une durée d'acquisition choisie, à partir de données dudit au moins un capteur de vibrations, avec une fréquence d'échantillonnage donnée, suite au passage dans ladite position d'ouverture,
- pour chacun des signaux temporels de vibrations, transformation du signal temporel de vibrations en un spectrogramme représenté dans un espace de représentation temps-fréquence,
- sélection d'un sous-ensemble prédéterminé de caractéristiques du spectrogramme, dit sous-ensemble de caractéristiques opérationnelles,
- application d'un modèle de prédiction paramétré par apprentissage machine supervisé, les valeurs dudit sous-ensemble de caractéristiques opérationnelles étant fournies en entrée dudit modèle de prédiction paramétré, pour obtenir une classe correspondant à une valeur estimée de courant de coupure,
- détermination, en fonction de la valeur de courant de coupure estimée et dudit seuil de courant nominal, d'un domaine de déclenchement du dispositif de commutation parmi : un déclenchement normal par commande, un déclenchement de surcharge suite à une surconsommation électrique d'au moins une charge de l'installation électrique et un déclenchement suite à un court-circuit.

Avantageusement, le procédé proposé permet d'estimer un courant de coupure à partir de signaux obtenus par un capteur de vibrations intégré dans le dispositif de commutation, ce qui permet d'en déduire le domaine de déclenchement du dispositif de commutation.

Le procédé de détermination d'un domaine de déclenchement selon l'invention peut présenter une ou plusieurs des caractéristiques ci-dessous, prises indépendamment ou selon toutes les combinaisons acceptables.

La détermination d'un domaine de déclenchement du dispositif de commutation comporte la comparaison de la valeur de courant de coupure estimée au seuil de courant nominal, et
- lorsque ladite valeur de courant de coupure estimée est inférieure au seuil de courant nominal, le déclenchement est un déclenchement normal,
- lorsque ladite valeur de courant de coupure estimée est supérieure au seuil de courant nominal et inférieure à au seuil de courant nominal multiplié par un facteur de multiplication prédéterminé, le déclenchement est un déclenchement de surcharge et
- lorsque ladite valeur de courant de coupure estimée est supérieure au seuil de courant nominal multiplié ledit un facteur de multiplication, le déclenchement est un déclenchement de défaut.

Le procédé comprend en outre un affichage d'une indication relative au domaine de déclenchement déterminé sur l'interface homme-machine du dispositif de commutation.

L'obtention d'au moins un signal temporel de vibrations est effectuée après une application d'un décalage temporel de durée prédéterminée après le déclenchement du dispositif de commutation.

Le procédé comporte une phase d'apprentissage préalable à ladite phase opérationnelle, comportant
- une acquisition d'une pluralité de signaux temporels de vibrations, chaque signal temporel de vibration étant associé à une valeur de courant de coupure connue,
- une transformation de chaque signal temporel de vibrations en un spectrogramme et une mémorisation desdits spectrogrammes et des valeurs de courants de coupure associées dans une bibliothèque de spectrogrammes d'apprentissage.

La phase d'apprentissage comprend en outre une étape d'élimination récursive de caractéristiques, comportant une application récursive d'étapes de :
- a) apprentissage des paramètres dudit modèle de prédiction prenant en entrée des valeurs de caractéristiques d'un sous-ensemble de caractéristiques d'apprentissage des spectrogrammes calculés, ledit modèle de prédiction étant paramétré pour fournir, à partir des valeurs de caractéristiques dudit sous-ensemble de caractéristiques d'apprentissage, une classification dans une classe associée à une valeur de courant estimée,
- b) évaluation d'un score d'importance, par rapport au résultat du modèle de prédiction, de chaque caractéristique dudit sous-ensemble de caractéristiques d'apprentissage,
- c) élimination de la caractéristique de score d'importance le plus faible dudit sous-ensemble de caractéristiques d'apprentissage,
- d) mise à jour du sous-ensemble de caractéristiques d'apprentissage et répétition des étapes a) à d) jusqu'à ce que le sous-ensemble de caractéristiques d'apprentissage soit vide.

Le procédé comporte en outre une étape d'obtention d'un classement des caractéristiques par rang d'importance en fonction de l'ordre d'élimination des caractéristiques dudit sous-ensemble de caractéristiques d'apprentissage et sélection d'un nombre N prédéterminé des caractéristiques de rangs d'importance les plus élevés pour former le sous-ensemble de caractéristiques opérationnelles.

Le procédé comporte en outre une optimisation de la fréquence d'échantillonnage, de la durée d'acquisition et d'un décalage temporel à appliquer lors de l'obtention des signaux temporels de vibrations à traiter.

Selon un autre aspect, l'invention concerne un programme d'ordinateur comportant des instructions logicielles, qui, lorsqu'elles sont exécutées par un module de calcul électronique programmables, ledit module de calcul électronique programmable étant en outre configuré pour recevoir des données d'au moins un capteur de vibrations intégré dans ledit dispositif de commutation, mettent en œuvre un procédé de détermination d'un domaine de déclenchement d'un dispositif de commutation de circuit électrique tel que brièvement décrit ci-dessus.

Selon un autre aspect, l'invention concerne un système de détermination d'un domaine de déclenchement comportant un dispositif de commutation comportant au moins un capteur de vibrations et un module de calcul électronique configuré pour mettre en œuvre un procédé de détermination d'un domaine de déclenchement tel que décrit brièvement ci-dessus.

Avantageusement, le système de détermination d'un domaine de déclenchement est configuré pour mettre en œuvre un procédé de détermination d'un domaine de déclenchement d'un dispositif de commutation de circuit électrique tel que brièvement décrit ci-dessus, selon toutes les variantes envisagées.

D'autres caractéristiques et avantages de l'invention ressortiront de la description qui en est donnée ci-dessous, à titre indicatif et nullement limitatif, en référence aux figures annexées, parmi lesquelles :
[Fig 1] la figure 1 est une représentation schématique des modules fonctionnels d'un système de détermination d'un domaine de déclenchement selon un mode de réalisation;
[Fig 2] la figure 2 illustre des exemples de d'enregistrements de vibration dans le domaine temporel pour un déclenchement normal et pour un déclenchement de défaut du dispositif de commutation ;
[Fig 3] la figure 3 illustre des exemples de spectrogrammes correspondant aux enregistrements de la figure 2 ;
[Fig 4] la figure 4 est un synoptique des principales étapes d'un procédé de détermination d'un domaine de déclenchement dans une phase opérationnelle ;
[Fig 5] la figure 5 est un synoptique des principales étapes d'un procédé de détermination d'un domaine de déclenchement dans une phase d'apprentissage préalable à la phase opérationnelle.

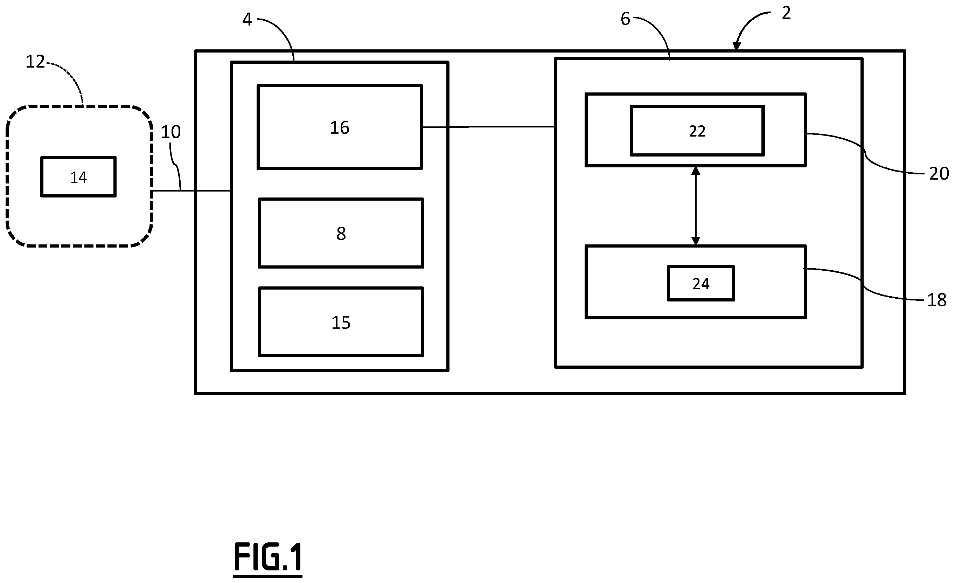

La figure 1 illustre de manière schématique les principaux blocs fonctionnels d'un système 2 de détermination d'un domaine de déclenchement selon un mode de réalisation.

Le système 2 comporte un dispositif de commutation de circuit électrique 4, également appelé disjoncteur par la suite, et un module de calcul électronique 6.

Le disjoncteur 4 comporte un module magnétothermique 8 configuré pour déclencher une coupure de circuit d'alimentation en courant électrique, schématiquement représenté par un fil 10, d'une installation électrique 12, l'installation électrique 12 comportant au moins une charge 14, le déclenchement étant effectué en cas de surcharge ou de défaut électrique. La source de courant électrique est par exemple un réseau de fourniture de courant électrique triphasé, ou monophasé, non représenté.

Divers modes de réalisation de module magnétothermique 8 sont connus dans le domaine des dispositifs de coupure de courant électrique (en anglais, 'circuit breakers').

Dans un mode de réalisation, le dispositif de commutation 4 est un dispositif compact de type MCCB (pour « Molded Case Circuit Breaker »), adapté pour fonctionner pour des courants allant de 16Ampères à 630Ampères.

Le disjoncteur 4 comporte, outre le module magnétothermique 8, un ou plusieurs capteurs de vibrations 16.

De préférence, le ou chaque capteur de vibrations 16 est un accéléromètre 3 axes.

Avantageusement, le capteur de vibrations 16 est adapté pour capter un signal représentatif des vibrations du dispositif de commutation. En effet, en cas de déclenchement d'une ouverture, pour un passage de position fermée en position « ouverte » (e.g. coupure du passage du courant électrique dans le circuit d'alimentation électrique de l'installation électrique), qu'il soit sur commande ou par disjonction, il se produit un choc mécanique qui excite les pièces du dispositif de commutation.

Dans le cas du déclenchement de l'ouverture du dispositif de commutation 4 en cas de surcharge ou de défaut, il se produit en plus une onde de choc due à l'intensité du courant de coupure. Cette onde de choc induit des vibrations supplémentaires, qui se superposent aux vibrations mécaniques du dispositif de commutation.

Le ou les capteurs de vibrations 16 sont positionnés de préférence à proximité du module magnétothermique 8.

De préférence, chaque capteur de vibrations 16 est positionné de manière à être facilement montable et démontable sur un produit neuf ou sur un produit existant. Avantageusement, cela permet d'améliorer des produits disjoncteurs existants.

Par exemple, dans le cas d'un courant triphasé, le dispositif de commutation 4 comporte un capteur de vibrations 16 par phase.

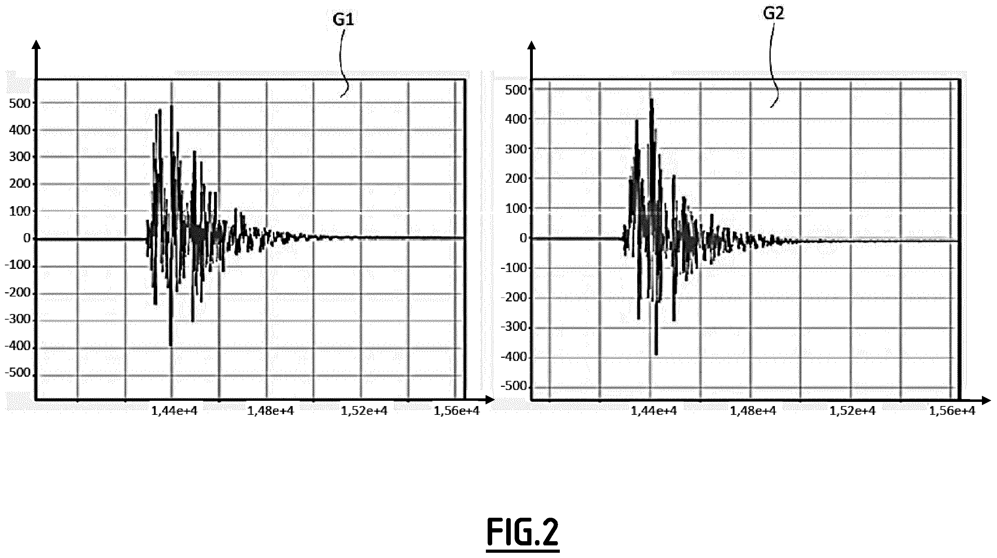

A titre d'exemple, la figure 2 illustre deux graphes G1 et G2, correspondant respectivement au cas de l'ouverture en déclenchement normal (graphe G1) ou en déclenchement de défaut (graphe G2), où le courant de coupure est de l'ordre de 12xln, Iₙ étant le seuil de courant nominal.

Chaque graphe G1, G2 illustre la courbe d'évolution, dans le domaine temporel, du signal temporel de vibrations capté par un capteur de vibrations, l'axe des abscisses représentant le temps exprimé en échantillons (les chiffres représentant les numéros d'échantillons de mesure) et l'axe de ordonnées représentant une valeur d'accélération mesurée exprimée en g.

Ces signaux temporels sont transformés par application d'une transformation de Fourier discrète pour obtenir des spectrogrammes, dans le domaine spectral temps-fréquence.

Comme on peut le constater sur la figure 2, les deux graphes G1, G2 ont des profils similaires.

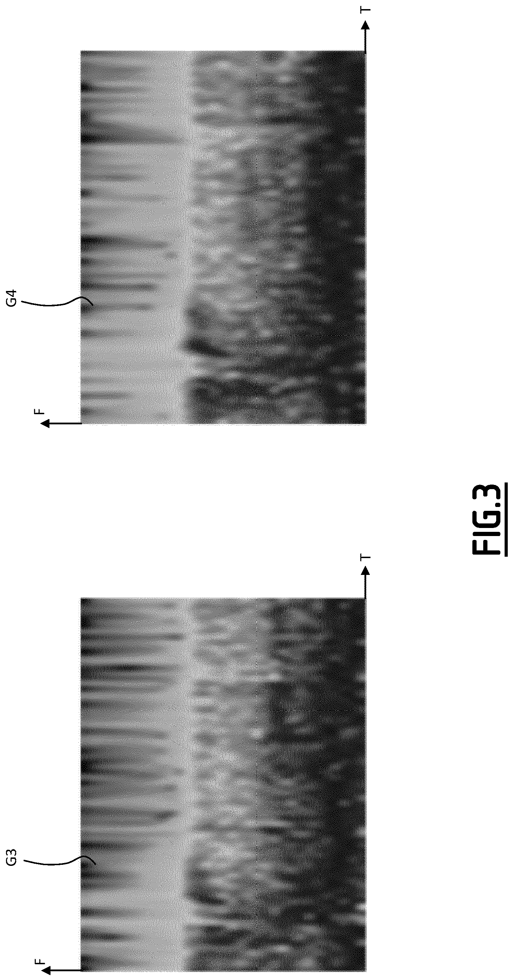

A titre d'exemple, la figure 3 illustre deux graphes G3, G4 ; compotant des spectrogrammes, représentés dans le domaine temps (en abscisse) et fréquence (en ordonnée) correspondant respectivement aux courbes des graphes G1 et G2 de la figure 2.

Le procédé proposé met en œuvre des outils élaborés pour discriminer les domaines de déclenchement, et estimer le courant de coupure à partir des spectrogrammes des signaux temporels de vibrations acquis.

Le disjoncteur 4 comporte en outre, de préférence, une interface homme-machine 15, par exemple un écran ou un ou plusieurs voyants lumineux, permettant alors d'afficher le domaine de déclenchement déterminé. Par exemple, dans le cas où l'interface homme-machine 15 comporte un ou plusieurs voyants lumineux, il est prévu d'allumer un voyant de couleur différente selon le domaine de déclenchement, par exemple vert pour un déclenchement normal, orange pour un déclenchement de surcharge et rouge pour un déclenchement de défaut.

Avantageusement, l'indication du domaine de déclenchement permet d'orienter les travaux de maintenance, par exemple un ré-équilibrage de charges en cas de surcharge ou une intervention sur l'installation électrique en cas de court-circuit.

Pour réaliser la détermination des domaines de déclenchement, le module de calcul électronique 6 comporte une unité de mémoire électronique 18 et un processeur de calcul 20, configuré pour mettre en œuvre un logiciel 22 comportant des instructions de programme qui lorsqu'elles sont exécutées par le processeur de calcul, exécutent un procédé de détermination d'un domaine de déclenchement tel que décrit ci-après.

En variante, le module de calcul électronique 6 est un module dédié réalisé sous forme d'un composant logique programmable tel qu'un FPGA (de l'anglais *Field Programmable Gate Array),* ou encore sous forme d'un circuit intégré dédié, tel qu'un ASIC (de l'anglais *Application Specific Integrated Circuit).*

La mémoire électronique 18 est adaptée à mémoriser en particulier des paramètres 24 d'un modèle de prédiction paramétré par apprentissage machine, adapté pour fournir, à partir d'un sous-ensemble de caractéristiques spectrales d'un signal de vibrations, une estimation d'une valeur de courant de coupure.

Dans un mode de réalisation, le module de calcul électronique 6 est intégré dans un même boîtier que le disjoncteur 4, formant ainsi un dispositif de commutation de circuit électrique configuré pour auto-déterminer un domaine de déclenchement d'ouverture de circuit électrique, entre un déclenchement normal, un déclenchement de surcharge ou un déclenchement de défaut électrique.

Dans une variante non représentée, le module de calcul électronique 6 configuré pour exécuter le logiciel 22 de détermination du domaine de déclenchement du disjoncteur 4 est distant du disjoncteur 4. Dans cette variante, chacun des dispositifs 4, 6 comporte en outre une interface de communication, adaptée à communiquer selon un protocole de communication donné, de manière à transmettre les signaux de vibrations acquis par le capteur de vibrations au module de calcul électronique, le module de calcul électronique 6 transmettant des informations relatives au domaine de déclenchement déterminé pour affichage sur l'interface homme-machine 15.

Le procédé de détermination d'un domaine de déclenchement d'un dispositif de commutation comporte deux phases, qui sont respectivement une phase préliminaire d'apprentissage et une phase opérationnelle de détermination du domaine de déclenchement en temps réel.

Par exemple, la phase préliminaire d'apprentissage est effectuée pour une catégorie donnée de disjoncteurs, avant leur mise en fonctionnement dans un circuit électrique.

Ainsi, la phase préliminaire d'apprentissage est effectuée par catégorie de disjoncteurs, les catégories étant définies par des spécifications de fabrication.

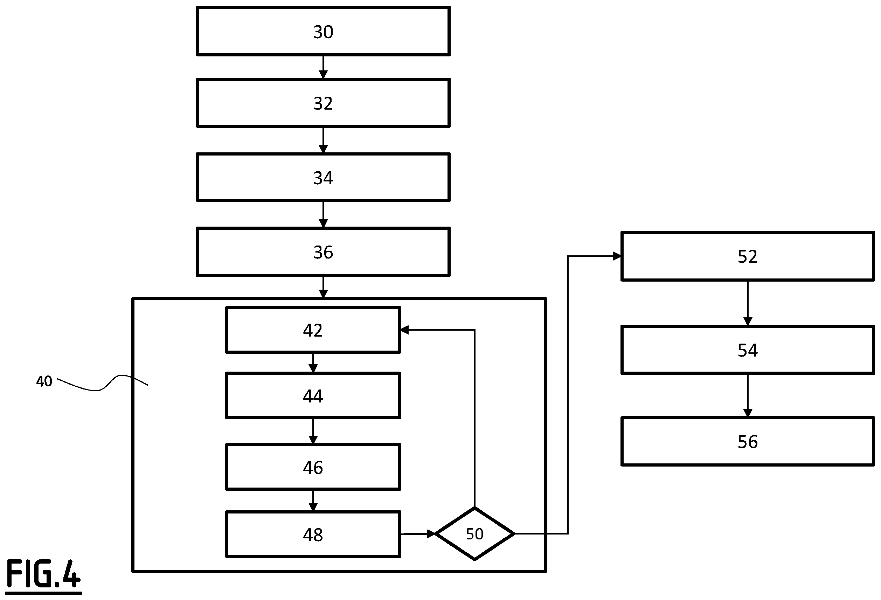

La figure 4 est un synoptique des principales étapes d'un procédé de détermination d'un domaine de déclenchement d'un dispositif de commutation de circuit électrique, dans la phase d'apprentissage.

Le procédé comprend une acquisition 30 des signaux temporels de vibrations, à partir d'un ou plusieurs disjoncteurs 4, par exemple d'une pluralité de disjoncteurs 4 appartenant à une catégorie donnée de disjoncteurs.

Dans le cas où le capteur de vibrations est un accéléromètre 3 axes, chaque signal est formé d'une série de valeurs d'accélérations discrètes enregistrées à une fréquence d'échantillonnage prédéterminée. Par exemple, la fréquence d'échantillonnage Fₑ est comprise entre 6,4 KHz et 25,6 KHz, par exemple égale à 25,6kHz. En phase d'apprentissage, le courant de coupure associé à chaque signal temporel de vibrations enregistré est connu, différentes valeurs de courant de défauts et de surcharges étant injectées dans le disjoncteur pour l'apprentissage.

Chaque signal temporel de vibrations est acquis sur une durée d'acquisition donnée, et comprend un nombre d'échantillons dépendant de la durée d'acquisition et de la fréquence d'échantillonnage.

L'acquisition 30 est suivie d'une étape 32 de transformation de chacun des signaux temporels de vibrations en un spectrogramme représenté dans un espace de représentation temps-fréquence.

L'étape de transformation 32 met en œuvre par exemple une transformation de Fourier discrète, de préférence une transformation de Fourier rapide FFT (pour « Fast Fourier Transform »), en utilisant la fenêtre de Hann. Bien entendu, il s'agit d'un exemple, d'autres variantes de fenêtrage sont utilisables.

Chaque colonne du spectrogramme correspond à une fenêtre temporelle donnée.

Dans un mode de réalisation, le procédé comprend également, optionnellement, une étape 34 de normalisation dans laquelle chaque colonne du spectrogramme est normalisée par rapport à la somme des valeurs de la colonne, puis le spectrogramme normalisé est converti à l'échelle logarithmique à l'étape 36 de changement d'échelle.

Les étapes 30 à 36 sont répétées pour une pluralité de valeurs de courant de coupure données, ce qui permet d'obtenir une bibliothèque de spectrogrammes d'apprentissage, comportant des spectrogrammes d'apprentissage, chaque spectrogramme d'apprentissage étant associé à un valeur de courant de coupure. La bibliothèque de programmes d'apprentissage est mémorisée.

Chaque spectrogramme est représenté sous forme de matrice de taille LxM, comportant des valeurs, chaque valeur étant relative à un indice temporel i et à un indice fréquentiel j. Un élément du spectrogramme identifié par des indices (i,j) est également appelé caractéristique, chaque caractéristique ayant une valeur associée pour un spectrogramme donné.

Le procédé comporte ensuite la mise en œuvre d'une étape 40 d'élimination récursive de caractéristiques (en anglais, *« Recursive Feature Elimination »),* permettant de déterminer un sous-ensemble de caractéristiques opérationnelles, qui sont les caractéristiques considérées les plus pertinentes pour la réalisation de l'estimation du courant de coupure, en appliquant un modèle de prédiction paramétré par apprentissage machine choisi.

On entend par sous-ensemble de caractéristiques un sous-ensemble de points (k,l) de la matrice représentative du spectrogramme.

L'étape 40 d'élimination récursive de caractéristiques comprend l'itération des étapes suivantes, pour un modèle de prédiction choisi.

Le modèle de prédiction est un modèle paramétré dont les paramètres sont appris par apprentissage machine supervisé (en anglais, « supervised machine learning »), parmi : les machines à vecteurs de support ou SVC pour « Support Vector Classifier », apprentissage par arbre de décision (en anglais « decision tree classifier »), la régression logistique, classifieur de type « ridge classifier », classifieur k-voisins, classifieur de type « bagging classifier », classifieur par forêts aléatoires (« random forest classifier »), arbre de classification de type gradient boosting, ou des réseaux de neurones adéquats, comme par exemple un réseau de type perceptron multicouche.

Dans un mode de réalisation, un classifieur SVC à noyau linéaire est mis en œuvre.

L'étape 40 d'élimination récursive de caractéristiques comprend une étape 42 d'entraînement du modèle de prédiction choisi, de manière supervisée, en fournissant en entrée un sous-ensemble de valeurs de caractéristiques du spectrogramme, appelé sous-ensemble de caractéristiques d'apprentissage. Initialement, le sous-ensemble de caractéristiques d'apprentissage est égal à l'ensemble des caractéristiques du spectrogramme, i.e. la matrice de taille LxM représentative du spectrogramme.

L'application du modèle de prédiction fournit, en sortie, une classe correspondant à une estimation de courant de coupure, ce qui permet de déterminer une classification dans un domaine de déclenchement parmi les trois domaines de déclenchement : déclenchement normal, déclenchement de surcharge, ou déclenchement de défaut, dû à la présence d'un court-circuit dans le dispositif de commutation.

Par exemple, dans un mode de réalisation, le modèle de prédiction fournit en sortie une classification dans une classe parmi C classes, par exemple C=3 correspondant respectivement aux trois domaines de déclenchement.

En variante le nombre C de classes est supérieur à 3, plusieurs classes de la classification correspondant alors à un même domaine de déclenchement parmi les trois domaines de déclenchement listés.

Le seuil de courant nominal Iₙ du disjoncteur mis en œuvre étant connu, les domaines de déclenchement sont associés au niveau de courant de coupure Ic de la manière suivante :
- déclenchement normal : courant de coupure Ic inférieur à In ;
- déclenchement de surcharge : courant de coupure Ic compris entre In et QxIn ;
- déclenchement de défaut : courant de coupure Ic supérieur à QxIn,
où Q est un facteur multiplicatif prédéterminé, par exemple Q=10.

La valeur de courant de coupure Ic associée à chaque spectrogramme étant connue dans la phase d'apprentissage, les paramètres du modèle sont réglés pour que l'application du modèle fournisse, pour chaque spectrogramme, une valeur de courant de coupure estimée la plus proche, selon la classification choisie, de la valeur de courant de coupure initiale Ic.

L'étape 42 est suivie d'une étape 44 d'évaluation d'un score d'importance associé à chaque élément du sous-ensemble de caractéristiques d'apprentissage fourni en entrée par rapport au résultat de l'application du modèle de prédiction.

Par exemple, le score d'importance est obtenu par corrélation statistique, coefficients de modèles linéaires, arbres de décision ou scores de permutation selon le modèle de prédiction appliqué.

Suite à l'application de l'étape 44 d'évaluation de score d'importance, la caractéristique de score d'importance le plus faible est déterminée à l'étape 46, et éliminée du sous-ensemble de caractéristiques dont les valeurs sont fournies en entrée.

Le sous-ensemble de caractéristiques est alors mis à jour à l'étape 48.

Les étapes 42 à 48 sont répétées, tant qu'il reste au moins une caractéristique dans le sous-ensemble de caractéristiques mis à jour (test 50). En particulier l'entraînement du modèle de prédiction choisi est répété à partir du sous-ensemble de caractéristiques mis à jour.

Lorsque le sous-ensemble de caractéristiques mis à jour est vide, le test 50 est suivi d'une étape 52 d'obtention du classement des caractéristiques du spectrogramme par rang d'importance.

L'ordre d'élimination des caractéristiques fournit un classement des caractéristiques du spectrogramme, chaque caractéristique ayant un rang associé, par exemple dans l'ordre décroissant d'importance, la caractéristique de rang 1 étant la caractéristique la plus importante, éliminée en dernier, et la caractéristique de rang le plus élevé étant la caractéristique la moins importante, éliminée en premier.

L'étape 52 est suivie d'une étape 54 de sélection d'un nombre N de caractéristiques les plus importantes pour la réussite de la classification. Le nombre N est choisi, de préférence N est compris entre 1 et quelques milliers, par exemple entre 1 et 4000, plus particulièrement de préférence N est égal à 200.

Lorsque N est égal à 200, les caractéristiques de rangs allant de 1 à 200 sont alors retenues et forment un sous-ensemble de caractéristiques dit sous-ensemble de caractéristiques opérationnelles. En d'autres termes, ce sont les N caractéristiques du spectrogramme éliminées en dernier qui forment le sous-ensemble de caractéristiques opérationnelles, sélectionné à l'étape de sélection 54.

Le sous-ensemble de caractéristiques opérationnelles est mémorisé, à l'étape 54, par exemple sous forme d'un tableau de coordonnées (k,l) de chaque caractéristique sélectionnée dans la matrice de spectrogramme, ou dans toute autre structure de mémorisation appropriée.

Avantageusement, la sélection d'un nombre N de caractéristiques permet de réduire la complexité calculatoire.

Le procédé comporte en outre, optionnellement, une étape d'évaluation de performances 56 consistant par exemple à calculer une matrice de confusion sur la bibliothèque de spectrogrammes d'apprentissage, en appliquant le modèle de prédiction entraîné avec les N caractéristiques du spectrogramme sélectionnées, pour la classification de spectrogrammes qui n'ont pas été utilisés pour l'entraînement.

Dans un mode de réalisation, un premier pourcentage, par exemple 80%, des spectrogrammes de la bibliothèque de spectrogrammes sont utilisés pour l'entraînement et un deuxième pourcentage, par exemple 20%, pour l'évaluation de performances.

Selon une variante, tous les spectrogrammes de la bibliothèque obtenue pour plusieurs instances d'un produit appartenant à la même gamme (i.e. catégorie de disjoncteurs) sauf une (instance) sont utilisés pour l'entraînement, les spectrogrammes restants (correspondant à une instance non-utilisée dans l'entraînement) étant utilisés pour l'évaluation, l'opération étant répétée par exemple sur toutes les combinaisons possibles.

Optionnellement, le procédé comporte en outre une optimisation de la fréquence d'échantillonnage, de la durée d'acquisition de signal et d'une durée de décalage temporel après passage du dispositif de commutation en position ouverte, divers paramètres étant testés et la performance étant évaluée à l'étape d'évaluation de performance de classification 56.

Ainsi, les inventeurs ont mis en exergue la possibilité de réduire la fréquence d'échantillonnage et la durée d'acquisition des signaux, tout en conservant une bonne performance de classification.

De plus, avantageusement, l'application d'un décalage temporel Δ, de l'ordre de 20ms après le déclenchement du disjoncteur permet également d'obtenir des performances de classification satisfaisantes.

Les paramètres de fréquence d'échantillonnage Fₑ, de décalage temporel Δ et de durée d'acquisition Dₜ obtenus par optimisation sont mémorisés, pour leur utilisation dans la phase opérationnelle.

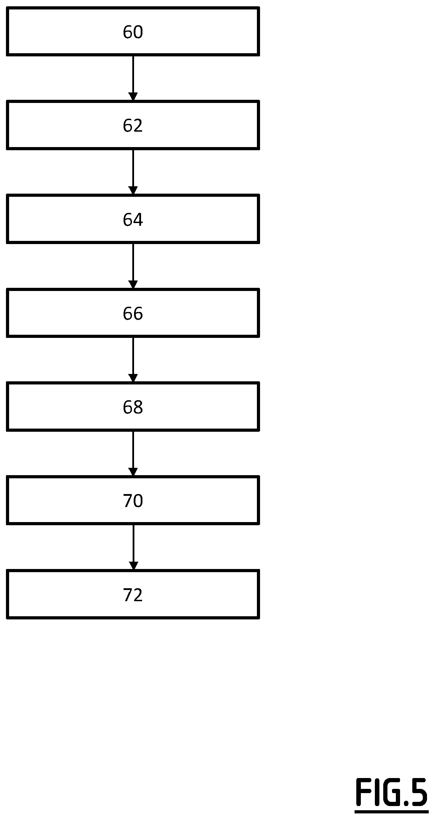

La figure 5 est un synoptique des principales étapes d'un procédé de détermination d'un domaine de déclenchement d'un dispositif de commutation de circuit électrique, en phase opérationnelle.

Le procédé comporte une étape 60 d'acquisition de signaux temporels de vibrations, à la fréquence d'échantillonnage Fₑ préalablement déterminée, suite à un choc vibratoire du dispositif de commutation, correspondant au passage de la position de fermeture à la position ouverte suite à une disjonction.

L'acquisition 60 est suivie d'une étape 62 d'obtention des signaux temporels de vibrations à traiter, en appliquant le décalage temporel Δ et de durée d'acquisition Dₜ préalablement obtenus.

Dans le cas où le capteur de vibrations est un accéléromètre trois axes, pour chaque axe, le spectrogramme du signal est calculé à l'étape 64, par exemple par application d'une transformation de Fourier discrète rapide FFT.

L'étape 64 est suivie, pour chaque spectrogramme calculé, de la sélection 66 d'un sous-ensemble de caractéristiques du spectrogramme, le sous-ensemble de caractéristique étant le sous-ensemble de caractéristiques opérationnelles préalablement défini et mémorisé.

Pour chaque spectrogramme calculé, les valeurs correspondant audit sous-ensemble de caractéristiques opérationnelles sont extraites à l'étape 66 et fournies en entrée d'une étape 68 d'application du modèle de prédiction paramétré par apprentissage machine supervisé, dont les paramètres ont été réglés et mémorisés lors de l'étape préalable d'apprentissage.

Dans un mode de réalisation, les valeurs correspondant audit sous-ensemble de caractéristiques opérationnelles sont extraites de chaque spectrogramme, et combinées en une structure d'entrée (e.g. vecteur ou matrice) sur lequel est appliqué le modèle de prédiction paramétré.

A l'issue de l'étape 68 est obtenue une classification fournissant une estimation de la valeur du courant de coupure, en fonction des valeurs du sous-ensemble de caractéristiques opérationnelles fournies en entrée, et un de domaine de déclenchement est ensuite déterminé, à l'étape de détermination de domaine de déclenchement 70, par comparaison de la valeur de courant de coupure estimée Ic avec le seuil de courant nominal In.

Plus précisément, si Ic est inférieure à In, il s'agit d'un déclenchement normal par commande ; si Ic est comprise entre In et QxIn, il s'agit d'un déclenchement de surcharge ; si Ic est supérieur à Qxln, il s'agit d'un déclenchement de défaut, le facteur Q étant par exemple égal à 10.

Alternativement, le domaine de déclenchement est obtenu en une seule étape, le résultat de la classification réalisée par le modèle de prédiction paramétré étant une classification dans un des domaines de déclenchement prévus.

L'étape de détermination de domaine de déclenchement 70 est suivie d'une étape 72 d'affichage d'une indication relative au domaine de déclenchement déterminé sur l'interface homme-machine du dispositif de commutation, par exemple par allumage d'un voyant lumineux de couleur correspondante, selon un code couleurs préalablement choisi.

## Revendications

1. Procédé de détermination d'un domaine de déclenchement d'un dispositif de commutation (4) de circuit électrique adapté à alimenter une installation électrique (12) comprenant au moins une charge (14), le dispositif de commutation (4) ayant une position d'ouverture dans laquelle la circulation d'un courant électrique dans ledit circuit électrique est coupée, et une position de fermeture dans laquelle un courant électrique circule dans ledit circuit électrique, le déclenchement du passage de la position de fermeture à la position d'ouverture étant effectué soit suite à une commande, soit suite à une détection d'un courant de coupure circulant dans ledit dispositif de commutation (4), le courant de coupure ayant un niveau dépassant un seuil de courant nominal, le procédé étant mis en oeuvre par un module de calcul électronique configuré (6) pour recevoir des données d'au moins un capteur de vibrations (16) intégré dans ledit dispositif de commutation (4), le procédé comprenant , dans une phase opérationnelle, des étapes de:
- obtention (62) d'au moins un signal temporel de vibrations, sur une durée d'acquisition choisie, à partir de données dudit au moins un capteur de vibrations, avec une fréquence d'échantillonnage donnée, suite au passage dans ladite position d'ouverture,
- pour chacun des signaux temporels de vibrations, transformation (64) du signal temporel de vibrations en un spectrogramme représenté dans un espace de représentation temps-fréquence,
- sélection (66) d'un sous-ensemble prédéterminé de caractéristiques du spectrogramme, dit sous-ensemble de caractéristiques opérationnelles,
le procédé étant **caractérisé en ce qu'**il comprend, en outre, les étapes de :
- application (68) d'un modèle de prédiction paramétré par apprentissage machine supervisé, les valeurs dudit sous-ensemble de caractéristiques opérationnelles étant fournies en entrée dudit modèle de prédiction paramétré, pour obtenir une classe correspondant à une valeur estimée de courant de coupure,
- détermination (70), en fonction de la valeur de courant de coupure estimée et dudit seuil de courant nominal, d'un domaine de déclenchement du dispositif de commutation parmi : un déclenchement normal par commande, un déclenchement de surcharge suite à une surconsommation électrique d'au moins une charge de l'installation électrique et un déclenchement suite à un court-circuit.

2. Procédé selon la revendication 1, dans lequel la détermination (70) d'un domaine de déclenchement du dispositif de commutation comporte la comparaison de la valeur de courant de coupure estimée au seuil de courant nominal, et
- lorsque ladite valeur de courant de coupure estimée est inférieure au seuil de courant nominal, le déclenchement est un déclenchement normal,
- lorsque ladite valeur de courant de coupure estimée est supérieure au seuil de courant nominal et inférieure à au seuil de courant nominal multiplié par un facteur de multiplication prédéterminé, le déclenchement est un déclenchement de surcharge et
- lorsque ladite valeur de courant de coupure estimée est supérieure au seuil de courant nominal multiplié ledit un facteur de multiplication, le déclenchement est un déclenchement de défaut.

3. Procédé selon la revendication 1 ou 2, comprenant en outre un affichage (72) d'une indication relative au domaine de déclenchement déterminé sur l'interface homme-machine du dispositif de commutation.

4. Procédé selon l'une des revendications 1 à 3, dans lequel l'obtention (62) d'au moins un signal temporel de vibrations est effectuée après une application d'un décalage temporel de durée prédéterminée après le déclenchement du dispositif de commutation.

5. Procédé selon l'une des revendications 1 à 4, comportant une phase d'apprentissage préalable à ladite phase opérationnelle, comportant
- une acquisition (30) d'une pluralité de signaux temporels de vibrations, chaque signal temporel de vibration étant associé à une valeur de courant de coupure connue,
- une transformation (32) de chaque signal temporel de vibrations en un spectrogramme et une mémorisation (32) desdits spectrogrammes et des valeurs de courants de coupure associées dans une bibliothèque de spectrogrammes d'apprentissage.

6. Procédé selon la revendication 5, dans lequel ladite phase d'apprentissage comprend en outre une étape (40) d'élimination récursive de caractéristiques, comportant une application récursive d'étapes de :
- a) apprentissage (42) des paramètres dudit modèle de prédiction prenant en entrée des valeurs de caractéristiques d'un sous-ensemble de caractéristiques d'apprentissage des spectrogrammes calculés, ledit modèle de prédiction étant paramétré pour fournir, à partir des valeurs de caractéristiques dudit sous-ensemble de caractéristiques d'apprentissage, une classification dans une classe associée à une valeur de courant estimée,
- b) évaluation (44) d'un score d'importance, par rapport au résultat du modèle de prédiction, de chaque caractéristique dudit sous-ensemble de caractéristiques d'apprentissage,
- c) élimination (46) de la caractéristique de score d'importance le plus faible dudit sous-ensemble de caractéristiques d'apprentissage,
- d) mise à jour (48) du sous-ensemble de caractéristiques d'apprentissage et répétition des étapes a) à d) jusqu'à ce que le sous-ensemble de caractéristiques d'apprentissage soit vide.

7. Procédé selon la revendication 6, comportant en outre une étape d'obtention (52) d'un classement des caractéristiques par rang d'importance en fonction de l'ordre d'élimination des caractéristiques dudit sous-ensemble de caractéristiques d'apprentissage et sélection (54) d'un nombre N prédéterminé des caractéristiques de rangs d'importance les plus élevés pour former le sous-ensemble de caractéristiques opérationnelles.

8. Procédé selon l'une des revendications 5 à 7, comportant en outre une optimisation (56) de la fréquence d'échantillonnage, de la durée d'acquisition et d'un décalage temporel à appliquer lors de l'obtention des signaux temporels de vibrations à traiter.

9. Programme d'ordinateur comportant des instructions logicielles, qui, lorsqu'elles sont exécutées par un module de calcul électronique programmable, mettent en oeuvre un procédé de détermination d'un domaine de déclenchement d'un dispositif de commutation de circuit électrique (4) conforme aux revendications 1 à 8, ledit module de calcul électronique programmable étant en outre configuré pour recevoir des données d'au moins un capteur de vibrations (16) intégré dans ledit dispositif de commutation (4).

10. Système (2) de détermination d'un domaine de déclenchement d'un dispositif de commutation de circuit électrique adapté à alimenter une installation électrique (12) comprenant au moins une charge, le système (2) de détermination comportant un dispositif de commutation (4) ayant une position d'ouverture dans laquelle la circulation d'un courant électrique dans ledit circuit électrique est coupée, et une position de fermeture dans laquelle un courant électrique circule dans ledit circuit électrique, le déclenchement du passage de la position de fermeture à la position d'ouverture étant effectué soit suite à une commande, soit suite à une détection d'un courant de coupure circulant dans ledit dispositif de commutation (4), le courant de coupure ayant un niveau dépassant un seuil de courant nominal, le dispositif de commutation (4) comportant au moins un capteur de vibrations (16) intégré,
le système (2) comportant un module de calcul électronique configuré (6) pour recevoir des données d'au moins un capteur de vibrations (16) intégré dans ledit dispositif de commutation (4), et configuré pour mettre en oeuvre, dans une phase opérationnelle, de modules de :
- obtention d'au moins un signal temporel de vibrations, sur une durée d'acquisition choisie, à partir de données dudit au moins un capteur, avec une fréquence d'échantillonnage donnée, suite au passage dans ladite position d'ouverture,
- pour chacun des signaux temporels de vibrations, transformation du signal temporel de vibrations en un spectrogramme représenté dans un espace de représentation temps-fréquence,
- sélection d'un sous-ensemble prédéterminé de caractéristiques du spectrogramme, dit sous-ensemble de caractéristiques opérationnelles,
le système étant **caractérisé en ce que** le module de calcul électronique est configuré, en outre, pour mettre en œuvre de modules de :
- application d'un modèle de prédiction paramétré par apprentissage machine supervisé, les valeurs dudit sous-ensemble de caractéristiques opérationnelles étant fournies en entrée dudit modèle de prédiction paramétré, pour obtenir une classe correspondant à une valeur estimée de courant de coupure,
- détermination, en fonction de la valeur de courant de coupure estimée et dudit seuil de courant nominal, d'un domaine de déclenchement du dispositif de commutation parmi : un déclenchement normal par commande, un déclenchement de surcharge suite à une surconsommation électrique d'au moins une charge de l'installation électrique et un déclenchement suite à un court-circuit.

## Patentansprüche

1. Verfahren zur Bestimmung einer Auslösedomäne einer Schaltvorrichtung (4) eines Stromkreises zur Versorgung einer elektrischen Anlage (12) mit mindestens einer Last (14), wobei die Schaltvorrichtung (4) eine Öffnungsposition hat, in der der Fluss eines elektrischen Stroms in dem Stromkreis unterbrochen ist, und eine Schließposition, in der ein elektrischer Strom in dem Stromkreis fließt, wobei die Auslösung des Wechsels aus der Schließposition in die Öffnungsposition entweder infolge eines Befehls oder infolge einer Erkennung eines in der Schaltvorrichtung (4) fließenden Abschaltstroms erfolgt, wobei der Abschaltstrom ein Niveau aufweist, das einen Nennstromschwellenwert überschreitet, wobei das Verfahren von einem elektronischen Rechenmodul durchgeführt wird, das ausgelegt ist (6), um Daten von mindestens einem Vibrationssensor (16) zu empfangen, der in die Schaltvorrichtung (4) integriert ist, wobei das Verfahren in einer Betriebsphase folgende Schritte
umfasst:
- Erhalten (62) mindestens eines Vibrationszeitsignals über eine ausgewählte Erfassungsdauer aus Daten des mindestens einen Vibrationssensors mit einer gegebenen Abtastfrequenz nach dem Wechsel in die Öffnungsposition,
- Umwandeln (64), für jedes der Vibrationszeitsignale, des Vibrationszeitsignals in ein in einem Zeit-Frequenz-Darstellungsraum dargestelltes Spektrogramm,
- Auswählen (66) einer vorbestimmten Merkmalteilmenge des Spektrogramms, bezeichnet als Betriebsmerkmalteilmenge,
wobei das Verfahren **dadurch gekennzeichnet ist, dass** es ferner die folgenden Schritte umfasst:
- Anwenden (68) eines durch überwachtes maschinelles Lernen parametrisierten Vorhersagemodells, wobei die Werte der Betriebsmerkmalteilmenge am Eingang des parametrisierten Vorhersagemodells bereitgestellt werden, um eine Klasse zu erhalten, die einem geschätzten Abschaltstromwert entspricht,
- Bestimmen (70), in Abhängigkeit von dem geschätzten Abschaltstromwert und dem Nennstromschwellenwert, einer Auslösedomäne der Schaltvorrichtung aus: einer normalen Auslösung durch Befehl, einer Überlastauslösung infolge eines übermäßigen Stromverbrauchs mindestens einer Last der elektrischen Anlage und einer Auslösung infolge eines Kurzschlusses.

2. Verfahren nach Anspruch 1, wobei die Bestimmung (70) einer Auslösedomäne der Schaltvorrichtung den Vergleich des geschätzten Abschaltstromwerts mit dem Nennstromschwellenwert umfasst, und
- wenn der geschätzte Abschaltstromwert kleiner als der Nennstromschwellenwert ist, die Auslösung eine normale Auslösung ist,
- wenn der geschätzte Abschaltstromwert größer als der Nennstromschwellenwert und kleiner als der mit einem vorbestimmten Multiplikationsfaktor multiplizierte Nennstromschwellenwert ist, die Auslösung eine Überlastauslösung ist und
- wenn der geschätzte Abschaltstromwert größer ist als der mit dem einem Multiplikationsfaktor multiplizierte Nennstromschwellenwert, die Auslösung eine Fehlerauslösung ist.

3. Verfahren nach Anspruch 1 oder 2, das ferner eine Anzeige (72) einer Angabe bezüglich der bestimmten Auslösedomäne auf der Mensch-Maschine-Schnittstelle der Schaltvorrichtung umfasst.

4. Verfahren nach einem der Ansprüche 1 bis 3, wobei das Erhalten (62) mindestens eines Vibrationszeitsignals nach einer Anwendung einer zeitlichen Verschiebung mit einer vorbestimmten Dauer nach dem Auslösen der Schalteinrichtung erfolgt.

5. Verfahren nach einem der Ansprüche 1 bis 4, das eine der Betriebsphase vorausgehende Lernphase aufweist, die aufweist
- eine Erfassung (30) einer Vielzahl von Vibrationszeitsignalen, wobei jedes Vibrationszeitsignal einem bekannten Abschaltstromwert zugeordnet ist,
- eine Umwandlung (32) jedes Vibrationszeitsignals in ein Spektrogramm und eine Speicherung (32) der Spektrogramme und der zugeordneten Abschaltstromwerte in einer Lernspektrogrammbibliothek.

6. Verfahren nach Anspruch 5, wobei die Lernphase ferner einen Schritt (40) der rekursiven Eliminierung von Merkmalen umfasst, der eine rekursive Anwendung der folgenden Schritte aufweist:
- a) Lernen (42) der Parameter des Vorhersagemodells, das als Eingabe Merkmalwerte einer Lernmerkmal-Teilmenge der berechneten Spektrogramme verwendet, wobei das Vorhersagemodell parametrisiert ist, um aus den Merkmalwerten der Lernmerkmal-Teilmenge eine Klassifizierung in eine Klasse zu liefern, die einem geschätzten Stromwert zugeordnet ist,
- b) Evaluieren (44) eines Signifikanzscores in Bezug auf das Ergebnis des Vorhersagemodells für jedes Merkmal der Lernmerkmal-Teilmenge,
- c) Eliminieren (46) des Merkmals mit dem niedrigsten Signifikanzscore der Lernmerkmal-Teilmenge,
- d) Aktualisieren (48) der Lernmerkmal-Teilmenge und Wiederholen der Schritte a) bis d), bis die Lernmerkmal-Teilmenge leer ist.

7. Verfahren nach Anspruch 6, das ferner einen Schritt des Erhaltens (52) einer Klassifizierung der Merkmale nach Signifikanzrang in Abhängigkeit von der Reihenfolge der Eliminierung der Merkmale aus der Lernmerkmal-Teilmenge und des Auswählens (54) einer vorbestimmten Anzahl N der Merkmale mit den höchsten Signifikanzrängen umfasst, um die Betriebsmerkmalteilmenge zu bilden.

8. Verfahren nach einem der Ansprüche 5 bis 7, das ferner eine Optimierung (56) der Abtastfrequenz, der Erfassungsdauer und eines Zeitversatzes umfasst, der beim Erhalt der zu verarbeitenden Vibrationszeitsignale anzuwenden ist.

9. Rechnerprogramm, das Software-Anweisungen aufweist, die, wenn sie von einem programmierbaren elektronischen Rechenmodul ausgeführt werden, ein Verfahren zur Bestimmung einer Auslösedomäne einer elektrischen Schaltkreis-Schaltvorrichtung (4) nach den Ansprüchen 1 bis 8 durchführen, wobei das programmierbare elektronische Rechenmodul ferner ausgelegt ist, um Daten von mindestens einem in der Schaltvorrichtung (4) integrierten Vibrationssensor (16) zu empfangen.

10. System (2) zur Bestimmung einer Auslösedomäne einer Schaltvorrichtung eines Stromkreises zur Versorgung einer elektrischen Anlage (12) mit mindestens einer Last, wobei das Bestimmungssystem (2) eine Schaltvorrichtung (4) aufweist, die eine Öffnungsposition hat, in der der Fluss eines elektrischen Stroms in dem Stromkreis unterbrochen ist, und eine Schließposition, in der ein elektrischer Strom in dem Stromkreis fließt, wobei die Auslösung des Wechsels aus der Schließposition in die Öffnungsposition entweder infolge eines Befehls oder infolge einer Erkennung eines in der Schaltvorrichtung (4) fließenden Abschaltstroms erfolgt, wobei der Abschaltstrom ein Niveau aufweist, das einen Nennstromschwellenwert überschreitet, wobei die Schaltvorrichtung (4) mindestens einen integrierten Vibrationssensor (16) aufweist,
wobei das System (2) ein elektronisches Rechenmodul aufweist, das ausgelegt ist (6), um Daten von mindestens einem in die Schaltvorrichtung (4) integrierten Vibrationssensor (16) zu empfangen, und ausgelegt ist, um in einer Betriebsphase folgende Module umzusetzen:
- Erhalt mindestens eines Vibrationszeitsignals über eine ausgewählte Erfassungsdauer aus Daten des mindestens einen Sensors mit einer gegebenen Abtastfrequenz nach dem Wechsel in die Öffnungsposition,
- Umwandlung, für jedes der Vibrationszeitsignale, des Vibrationszeitsignals in ein in einem Zeit-Frequenz-Darstellungsraum dargestelltes Spektrogramm,
- Auswahl einer vorbestimmten Merkmalteilmenge des Spektrogramms, bezeichnet als Betriebsmerkmalteilmenge,
wobei das System **dadurch gekennzeichnet ist, dass** das elektronische Rechenmodul ferner ausgelegt ist, um folgende Module umzusetzen:
- Anwendung eines durch überwachtes maschinelles Lernen parametrisierten Vorhersagemodells, wobei die Werte der Betriebsmerkmalteilmenge am Eingang des parametrisierten Vorhersagemodell bereitgestellt werden, um eine Klasse zu erhalten, die einem geschätzten Abschaltstromwert entspricht,
- Bestimmung, in Abhängigkeit von dem geschätzten Abschaltstromwert und dem Nennstromschwellenwert, einer Auslösedomäne der Schaltvorrichtung aus: einer normalen Auslösung durch Befehl, einer Überlastauslösung infolge eines übermäßigen Stromverbrauchs mindestens einer Last der elektrischen Anlage und einer Auslösung infolge eines Kurzschlusses.

## Claims

1. Method for determining a tripping range of an electrical circuit switching device (4) designed to supply an electrical installation (12) comprising at least one load (14), the switching device (4) having an open position in which the flow of an electrical current in said electrical circuit is interrupted, and a closed position in which an electric current flows in said electric circuit, the tripping from the closed position to the open position being triggered either following a command or following detection of a breaking current flowing in said switching device (4), the breaking current having a level exceeding a rated current threshold, the method being implemented by an electronic computing module (6) configured to receive data from at least one vibration sensor (16) integrated into said switching device (4), the method comprising,
in an operational phase,
the following stages:
- obtaining (62) at least one vibration time signal, over a chosen acquisition period, from data from said at least one vibration sensor, with a given sampling frequency, following passage into said opening position,
- for each of the vibration time signals, transformation (64) of the vibration time signal into a spectrogram represented in a time-frequency representation space,
- selection (66) of a predetermined subset of characteristics of the spectrogram, known as the operational characteristics subset,
said method being **characterised in that** it further comprises the steps of:
- application (68) of a supervised machine learning parameterised prediction model, the values of said subset of operational characteristics being provided as input to said parameterised prediction model, to obtain a class corresponding to an estimated trip current value,
- determination (70), based on the estimated breaking current value and said rated current threshold, of a tripping range of the switching device from among: normal tripping by control, overload tripping following overconsumption of electricity by at least one load of the electrical installation and tripping following a short-circuit.

2. A method according to claim 1, wherein determining (70) a tripping range of the switching device comprises comparing the estimated breaking current value with the rated current threshold, and
- when the said estimated breaking current value is less than the rated current threshold, tripping is normal,
- when the said estimated breaking current value is greater than the rated current threshold and less than the rated current threshold multiplied by a predetermined multiplication factor, the trip is an overload trip, and
- when the said estimated breaking current value is greater than the rated current threshold multiplied by the said multiplication factor, the trip is a fault trip.

3. A method according to claim 1 or 2, further comprising a display (72) of an indication relating to the tripping range determined on the man-machine interface of the switching device.

4. A method according to one of claims 1 to 3, wherein obtaining (62) at least one vibration time signal is performed after applying a time delay of predetermined duration after the switching device is triggered.

5. Method according to one of claims 1 to 4, comprising a learning phase prior to said operational phase, comprising
- acquisition (30) of a plurality of vibration time signals, each vibration time signal being associated with a known breaking current value,
- transforming (32) each vibration time signal into a spectrogram and storing (32) said spectrograms and associated breaking current values in a library of learning spectrograms.

6. A method according to claim 5, wherein the said
learning phase further comprises a step (40) of recursive elimination of characteristics, comprising a recursive application of steps of:
- a) learning (42) the parameters of said prediction model taking as input characteristic values of a subset of learning characteristics of the calculated spectrograms, said prediction model being parameterised to provide, on the basis of the characteristic values of said subset of learning characteristics, a classification into a class associated with an estimated current value,
- b) evaluating (44) an importance score, with respect to the result of the prediction model, of each characteristic of said subset of learning characteristics,
- c) eliminating (46) the lowest scoring characteristic from said subset of training characteristics,
- d) updating (48) the training characteristic subset and repeating steps a) to d) until the training characteristic subset is empty.

7. A method according to claim 6, further comprising a step of obtaining (52) a classification of the characteristics by importance rank as a function of the order of elimination of the characteristics from the said subset of learning characteristics and selection (54) of a predetermined number N of the characteristics with the highest importance ranks in order to form the subset of operational characteristics.

8. A method according to one of claims 5 to 7, further comprising optimisation (56) of the sampling frequency, the acquisition duration and a time delay to be applied when obtaining the vibration time signals to be processed.

9. A computer program comprising software instructions, which, when executed by a programmable electronic computing module, implement a method of determining a trip range of an electrical circuit switching device (4) according to claims 1 to 8, said programmable electronic computing module being further configured to receive data from at least one vibration sensor (16) integrated into said switching device (4).

10. A system (2) for determining a tripping range of an electrical circuit switching device configured to supply an electrical installation (12) comprising at least one load, the determination system (2) comprising a switching device (4) having an open position in which the flow of an electrical current in said electrical circuit is interrupted, and a closed position in which an electric current flows in said electric circuit, the transition from the closed position to the open position being triggered either following a command or following detection of a breaking current flowing in said switching device (4), the breaking current having a level exceeding a rated current threshold, the switching device (4) comprising at least one integrated vibration sensor (16),
the system (2) comprising an electronic calculation module (6) configured to receive data from at least one vibration sensor (16) integrated into said switching device (4), and configured to implement, in an operational phase, modules:
- to obtain at least one vibration time signal, over a chosen acquisition period, from data from said at least one sensor, with a given sampling frequency, following passage into said opening position,
- for each of the vibration time signals, transformation of the vibration time signal into a spectrogram represented in a time-frequency representation space,
- selection of a predetermined subset of the spectrogram's characteristics, known as the operational characteristics subset,
the system being **characterised in that** the electronic calculation module is further configured to implement:
- application of a parameterised prediction model by supervised machine learning, the values of said subset of operational characteristics being provided as input to said parameterised prediction model, to obtain a class corresponding to an estimated value of breaking current,
- determination, as a function of the estimated breaking current value and said rated current threshold, of a switching device tripping range from among: normal tripping by control, overload tripping following overconsumption of electricity by at least one load in the electrical installation and tripping following a short-circuit.
